# EUROPEAN PATENT APPLICATION

(11) **EP 2 453 609 A1**
(43) Date of publication of application: **16.05.2012**
(21) Application number: 10796725.9
(22) Date of filing: 06.07.2010
(51) Int. Cl.: H04L 12/14, H04M 15/00, H04M 17/00, H04W 4/24

(54) **METHOD, DEVICE AND COMMUNICATION SYSTEM FOR GROUP CHARGING**

(30) Priority: 06.07.2009 CN 200910151932; 01.09.2009 CN 200910168159
(71) Applicant: Huawei Technologies Co., Ltd., Shenzhen, Guangdong 518129 (CN)
(72) Inventor: ZHOU, Han, Shenzhen Guangdong 518129 (CN); WU, Wenfu, Shenzhen Guangdong 518129 (CN); CHEN, Zhongping, Shenzhen Guangdong 518129 (CN); SUN, Xiaoji, Shenzhen Guangdong 518129 (CN)
(74) Representative: Isarpatent
(86) International application number: PCT/CN2010/075012
(87) International publication number: WO 2011/003348

(57) **Abstract**

A group charging method, a charging processing apparatus and a communication system are provided in the embodiments of the present invention, in which the group charging method includes: obtaining at least one of a group identifier and a field of a charging characteristic of a user equipment; generating a charging rule according to the obtained at least one of the group identifier and the field of the charging characteristic; and charging user equipments in a group according to the charging rules. The charging processing apparatus includes: an obtaining module, configured to obtain at least one of a group identifier and a field of a charging characteristic of a user equipment; a charging rule generating module, configured to generate a charging rule according to the obtained at least one of the group identifier and the field of the charging characteristic; and a charging module, configured to charge user equipments in a group according to the charging rules. The communication system includes the charging processing apparatus. The method, the apparatus and the communication system provided in the embodiments of the present invention are capable of improving charging efficiency of charging user equipments of a group and reducing the overhead of network resources.

## Description

This application claims priority to Chinese Patent Application No. 200910151932.5, filed with the Chinese Patent Office on July 6, 2009 and entitled "GROUP CHARGING METHOD, CHARGING PROCESSING APPARATUS AND COMMUNICATION SYSTEM", and Chinese Patent Application No. 200910168159.3, filed with the Chinese Patent Office on September 1, 2009 and entitled "GROUP CHARGING METHOD, CHARGING PROCESSING APPARATUS AND COMMUNICATION SYSTEM" which are incorporated herein by reference in their entireties.

### FIELD OF THE INVENTION

The present invention relates to the field of communications technologies, and in particular, to a group charging method, a charging processing apparatus and a communication system.

### BACKGROUND OF THE INVENTION

In order to cope with challenge of wireless broadband technologies, 3GPP formulates a project of long term evolution (Long Term Evolution, LTE for short below), a new mobile communication network architecture is defined under the guidance of the project, and the architecture is flatter relative to the general packet radio service (Genreral Packet Radio Service, GPRS for short below)/universal mobile telecommunications system (Universal Mobile Telecommunications System, UMTS for short below), and reserves a packet domain, which may be referred to as an evolved packet system (Evolved Packet System, EPS for short below).

A core network of a wireless evolution network mainly includes three logic function entities: a mobility management entity (Mobility Management Entity, MME for short below), a serving gateway (Serving Gateway, SGW for short below), and a packet data network gateway (Packet Data Network Gateway, PGW for short below), in which the MME is responsible for NAS signaling, NAS signaling encryption, and roaming and tracking functions, allocates a temporary identity to a user, and is responsible for a security function; the MME corresponds to a control plane part of a serving GPRS support node (Serving GPRS Support Node, SGSN for short below) in the UMTS system; the SGW is responsible for a local mobility anchor point, a mobility anchor point in the 3GPP system, and legally monitoring relevant information; the PGW is responsible for policy execution, charging, and legally monitoring a relevant function.

In the prior art, a human to human (Human to Human, H2H for short below) communication model and a machine to machine (Machine to Machine, M2M for short below) communication model exist, in which M2M refers to network communication of one network element or between multiple network elements without human participation, such as transportation control and management, factory monitoring, and remote meter reading, and in an M2M application, multiple M2M terminals form an entirety, for short, a group (Group or user equipment set), and a network operator or a user in the industry may manage and control the group as a whole. For example, through the remote meter reading application in the electric power industry, all ammeters in a certain region may be formed into a group, and a network operator and an electric power industry user may perform mobility management optimization or access management on the group as a whole.

In an H2H application of an existing communication model, a network operator performs charging according to the user granularity, and specifically, after a user uses a service provided by the network operator, the network operator generates a charging data record for the user (subscription data exists in an operator network). Specifically, after obtaining a PCC rule, the PGW and the SGW each charge a single user according to a charging rule in the policy charging control (Policy Charging Control, PCC for short below) rule, and the charging rule may include a charging key (Charging Key), a charging method (Charging Method) and a measuring method (Measuring Method); the PGW and the SGW generate a charging data record according to the charging rule, use the charging key in the charging rule as an identifier of the charging data record, determine, according to the charging method, whether offline charging is performed or other charging manners are performed, and determine, according to the charging method, whether measuring is performed according to traffic or measuring is performed according to duration, and the PGW and the SGW combine the charging key in the charging data record and address information of the PGW and the SGW with the charging data record, thereby finally generating the charging data record of the user.

During the implementation of the present invention, the inventors find that the prior art has at least the following technical problems. In the prior art, the charging manner is to perform charging according to the user granularity, and if multiple terminals access a network, for example, in an M2M application, if an industry user has a large number of user equipments, as far as an operator is concerned, what the operator should pay attention to is the charging of entire industry users or a user equipment group, and if the charging is performed by adopting the existing charging manner, a large number of charging data records are generated, thereby resulting in low charging efficiency of the operator, and greatly increasing the overhead of network resources.

### SUMMARY OF THE INVENTION

An objective of embodiments of the present invention is to provide a group charging method, a charging processing apparatus and a communication system, so as to charge a group by generating a group charging rule.

In order to achieve the objective, an embodiment of the present invention provides a group charging method, which includes:
obtaining at least one of a group identifier and a field of a charging characteristic of a user equipment;
generating a charging rule according to the obtained at least one of the group identifier and the field of the charging characteristic; and
charging user equipments in a group according to charging rules.

An embodiment of the present invention further provides a charging processing apparatus, which includes:
an obtaining module, configured to obtain at least one of a group identifier and a field of a charging characteristic of a user equipment;
a charging rule generating module, configured to generate a charging rule according to the obtained at least one of the group identifier and the field of the charging characteristic; and
further includes:
   a sending module, configured to send the charging rule to a charging network element, in which the charging network element charges user equipments in a group according to charging rules; or
   a charging module, configured to charge user equipments in a group according to the charging rules.

An embodiment of the present invention further provides a communication system, which includes the foregoing charging processing apparatus.

With the group charging method, the charging processing apparatus and the communication system provided by the embodiments of the present invention, at least one of a group identifier and a field of a charging characteristic is obtained, a charging rule is generated according to the at least one of the group identifier and the field of the charging characteristic, and user equipments in a group is charged according to the charging rule, thereby improving charging efficiency of charging user equipments in the group, and reducing the overhead of network resources.

### BRIEF DESCRIPTION OF THE DRAWINGS

FIG. 1 is a schematic flowchart of an embodiment of a group charging method according to the present invention;

FIG. 2 is a schematic flowchart of a first specific embodiment of a group charging method according to the present invention;

FIG. 3 is a schematic flowchart of a second specific embodiment of a group charging method according to the present invention;

FIG. 4 is a schematic flowchart of a third specific embodiment of a group charging method according to the present invention;

FIG. 5 is a schematic flowchart of a fourth specific embodiment of a group charging method according to the present invention; and

FIG. 6 is a schematic structural diagram of an embodiment of a charging processing apparatus according to the present invention.

### DETAILED DESCRIPTION OF THE EMBODIMENTS

The technical solutions of the present invention are further described in detail hereinafter with reference to the accompanying drawings and the embodiments.

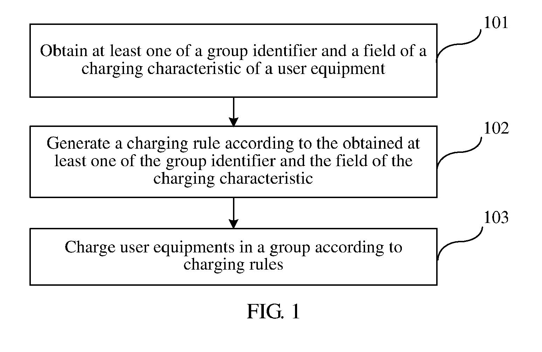

An embodiment of the present invention provides a charging method with respect to a group, FIG. 1 is a schematic flowchart of an embodiment of a group charging method according to the present invention, and as shown in FIG. 1, the group charging method includes the following steps.

Step 101: Obtain at least one of a group identifier and a field of a charging characteristic of a user equipment.

Step 102: Generate a charging rule according to the at least one of the group identifier and the field of the charging characteristic.

Step 103: Charge user equipments in a group according to charging rules.

In this embodiment, the group identifier, the field of the charging characteristic, or the group identifier and the field of the charging characteristic of the user equipment is obtained by a charging processing apparatus, the charging processing apparatus may be disposed in a PGW or a GGSN or a SGW or a policy charging rules function (Policy Charging Rules Function, PCRF for short below) or a charging system, such as, an OCS or an OFCS, the charging rule is generated according to the group identifier, and user equipments in a group is charged according to the charging rules, the overhead of network resources can be reduced.

In the embodiment, the charging processing apparatus may obtain the group identifier of the user equipment in the following manners: carried by the user equipment in an attach request message (Attach Request); or carried by a home subscriber server or a group subscription database in an update location acknowledgment message (Update Location Acknowledge); or carried by a service subscription database or a group subscription database in a profile information response message (Profile Response); or carried by a mobility management entity in a create session establishment request message (Create Session Request) or a create packet data context request message (Create PDP Context Request); or carried by a policy and charging rule function entity in an IP CAN session establishment acknowledgment message (Acknowledge IP CAN Session Establish) or an IP CAN session modification acknowledgment message (Acknowledge IP CAN Session Modification).

In the embodiment, the generating the charging rule according to the group identifier of the user equipment may be implemented through the following manners: charging key information (Charging Key) in the charging rule is allocated according to the group identifier of the user equipment, specifically, the group identifier of the user equipment is obtained in step 101, and when a charging rule generating module generates the charging rules, the charging rule generating module allocates the same charging key (Charging Key) to user equipments having the same group identifier. The charging rule may be generated according to user equipment granularity or bearer granularity (such as, in an attach process or a PDN connectivity establishment process), or may be generated according to SDF (Service Data Flow) granularity (such as, a resource allocation/modification process or dedicated bearer establishment process initiated by the user equipment). Optionally, the charging processing apparatus may also generate a Charging Key used by the user equipment with respect to the user equipment granularity, further, the charging processing apparatus generates, according to the group identifier of the user equipment, a charging key (Charging Key) used by an industry user (that is, the PGW or the GGSN or the SGW or the PCRF generates, according to a group charging key, a Charging Key for the user equipments having the same group identifier), and the charging processing apparatus (such as, the PGW or the GGSN or the SGW or the PCRF) notifies the charging key (Charging Key) used by the industry user to the charging system. According to the foregoing option description, the charging key (Charging Key) of the industry user is transferred to the charging system, the charging system performs charging processing on the industry user according to the charging key (Charging Key), the charging key (Charging Key) used by the user equipment may be transferred to another system (such as, a legal monitoring system), and another system performs processing on a user equipment level according to the charging key (Charging Key). Through separate processing for these two charging keys (Charging Key), not only the charging processing of the industry user in the charging system is implemented, but also processing of another system is not influenced.

Further, group charging (Group Based Charging) may be indicated in a charging method (Charging Method) in the charging rule, and in the case, when the charging rule is generated, after the charging rule generating module obtains the group identifier, the charging rule generating module may determine, according to the identifier, that group charging is to be performed, and therefore it is indicated in the charging method that the group charging is performed on the user equipments having the same group identifier. Additionally, the charging rule may also be generated according to the obtained field of the charging characteristic, for example, the field of the charging characteristic used for indicating the group charging may be obtained from obtained subscription data information (such as, the home subscriber server or the group subscription database carries the field of the charging characteristic indicating the group charging in the update location acknowledgment message), and the charging rule is generated according to at least one of the field of the charging characteristic and the group identifier; when the charging rule is generated according to the field of the charging characteristic, specifically the field of the charging characteristic may indicate the group charging; when the PCRF, the PGW or the GGSN acquires the field of the charging characteristic indicating the group charging, the PCRF, the PGW or the GGSN generates, according to the field of the charging characteristic, the charging rule used for indicating the group charging; for example, according to the field of the charging characteristic, the charging methods of the charging rules may indicate that group charging is performed on the user equipments in the group, or generate corresponding information indicating group charging to indicate that group charging is performed on the user equipments in the group, and in this case, a charging module and an apparatus that is used for generating the charging rules may be the same apparatus. The charging module performs the group charging on the user equipments in the group according to the charging methods in the charging rules, and specifically, the charging module may generate charging data records having the same charging key (Charging Key) for the user equipments in the group, and the charging module combines the charging data records according to the charging key. Alternatively, the charging module combines the charging data records of the user equipments in the group according to the group identifier. The obtaining the field of the charging characteristic, which is used for indicating group charging, in the subscription data information may include the following manners: such as, obtaining a charging characteristic carried by a mobility management entity in a sent create session request message or a sent create packet data protocol context request message; or obtaining a charging characteristic carried by a packet data network gateway or a serving gateway in an IP CAN session establishment indication message; or obtaining a charging characteristic carried by a home subscriber server or a group subscription database in an update location acknowledgment message.

After the charging module obtains the charging rule of the indication information indicating that the charging method is to perform group charging, the charging module may acquire that group charging is required to be performed on the user equipment; specifically, a charging data record including the group identifier may be generated for each user equipment in the group according to the charging rule, and the charging data records are combined according to the group identifier; or the charging data record that has the charging identifier and is of each user equipment in the group is generated according to the charging rule, and charging data records of user equipments belonging to the same group are combined according to the charging methods. In step 101, after the group identifier of the user equipment is obtained, a group to which the user equipment belongs may be acquired.

Additionally, there may further be another implementation manner, that is, a charging rule includes the group identifier, that is, the charging rule with respect to a user equipment carries a group identifier, to indicate a group to which the user equipment belongs, and the charging module obtains the charging rule, and may acquire, according to the group identifier of the user equipment in the charging rule, that group charging is required to be performed on the user equipment; specifically, charging data records including the group identifier may be generated according to charging rules, and the charging data records are combined according to the group identifier, or charging data records of the user equipments in the group are generated according to the charging rules, and charging data records of the user equipments belonging to the same group are combined according to the group identifier.

In the embodiment, after charging rules having the same charging key are allocated to the user equipments having the same group identifier, performing charging on the user equipments of the group according to the charging rules may be that generating, according to the charging rules, a group charging data record for corresponding user equipments having the same charging key; or a charging data record including the group identifier is generated for each user equipment in the group according to the charging rule, and the charging data records are combined according to the group identifier; or charging data records of the user equipments in the group are generated according to the charging rules, and the charging data records are combined according to the charging key. Specifically, the implementation may be performed through the following manner: The charging processing apparatus performs group charging according to the charging rule, and generates a charging data record (CDR). The charging processing apparatus generates a charging data record for a first user equipment according to a charging rule, and the charging processing apparatus delivers the charging rule to a second user equipment, and allocates charging key information (Charging Key) in the charging rule according to the group identifier of the user equipment; if the charging key in the charging rule of the second user equipment is the same as the charging key in the charging rule of the first user equipment, the charging processing apparatus uses the charging data record generated for the first user equipment (that is, the charging processing apparatus generates one charging data record for charging rules having the same charging key). A premise of this characteristic is that the first user equipment and the second user equipment have the same group identifier, that is, the first user equipment and the second user equipment belong to the same group or the same user equipment group. Optionally, the charging key (Charging Key) used by the user equipment may be generated with respect to the user equipment granularity; further, the charging processing apparatus (the PGW or the GGSN or the SGW or the PCRF) may generate the charging key (Charging Key) used by the industry user with respect to the industry user, the charging processing apparatus may generate a charging data record according to the charging key (Charging Key) used by the industry user, or the charging processing apparatus (the PGW or the GGSN or the SGW) may generate a charging data record for each user equipment according to the charging key (Charging Key) used by the user equipment. Optionally, in the charging data record, the charging processing apparatus provides the obtained group identifier, and the charging processing apparatus not only can combine charging data records according to charging keys in the charging data records, but also can combine the charging data records according to the group identifier. According to the charging method, the user equipments of the group can be charged, thereby achieving the objective of reducing network resource overhead. In the embodiment of the present invention, the charging processing apparatus may be singly disposed in a network element, such as the PGW, the GGSN, the SGW, the PCRF, the OCS or the OFCS, or multiple network elements may cooperatively complete the function of the charging processing apparatus. For example, the PCRG or the PGW obtains at least one of a group identifier and a field of a charging characteristic of a user equipment, generates a charging rule according to the obtained at least one of the group identifier and the field of the charging characteristic, and charges user equipments in a group according to the charging rules; or the PCRF obtains at least one of a group identifier and a field of a charging characteristic of a user equipment, and generates a charging rule according to the obtained at least one of the group identifier and the field of the charging characteristic, and the PGW or the S-GW charges user equipments in a group according to the charging rules.

Multiple measurement methods (Measurement Method) may be embodied in the generated charging rule, that is, the charging the user equipments in the group according to the charging rules may specifically be: performing charging measurement according to a measurement method in a charging rule, in which the measurement method includes a duration measurement method, a traffic measurement method or an event measurement method; and generating a charging data record according to a result of the charging measurement. The duration measurement method refers to that a measurement unit (the PGW or the GGSN or the SGSN or the MME) measures online durations of all user equipments in the group, the measurement unit reports the measured durations to the charging processing apparatus (such as, a charging center), and the charging processing apparatus generates charging data records for this group according to the measured durations. Another method for measuring durations to generate charging data records may be that: The measurement unit (the PGW or the GGSN or the SGSN or the MME) measures online durations of all user equipments in the group, the charging unit (the PGW or the GGSN or the SGSN or the MME) generates charging data records (the charging data records may include the group identifier) according to the durations measured by the measurement unit, the charging unit reports the generated charging data records to the charging processing apparatus, and the charging processing apparatus combines, according to the charging key (Charging Key) or the group identifier, the charging data records reported by a charging unit to generate a final charging data record of the group. The traffic method refers to that the measurement unit (the PGW or the GGSN or the SGSN) measures data traffic generated by all user equipments in the group, the measurement unit reports the generated data traffic to the charging processing apparatus, and the charging processing apparatus generates a charging data record for this group according to the data traffic. Another method for measuring traffic to generate a charging data record may be that: The measurement unit (the PGW or the GGSN or the SGSN or the MME) measures data traffic generated by all user equipments in the group, the charging unit (the PGW or the GGSN or the SGSN or the MME) generates charging data records (the charging data records may include the group identifier) according to the data traffic generated by all user equipments in the group measured by the measurement unit, the charging unit reports the generated charging data records to the charging processing apparatus, and the charging processing apparatus combines, according to the charging key or the group identifier, the charging data records reported by a charging unit to generate a final charging data record of the group. The event measurement method refers to that the measurement unit (the PGW or the GGSN or the SGSN or the MME) measures events triggered by all user equipments in the group, such as, measuring the number of times by which all user equipments in the group initiates signaling, in which the signaling may include mobility management signaling or session management signaling, and the number of times for an attach request, or the number of times for a PDP context activation request, or the number of times for a location update request, or the number of times for a PDN connectivity establishment request. The measuring the events triggered all user equipments in the group further includes: measuring the number of PDP (bearer) contexts of all user equipments in the group, or measuring the number of the user equipments in the group, or measuring the number of datagrams sent by all user equipments of the group.

If the event measurement method is to measure the number of times by which all user equipments in the group initiate the signaling, in which the signaling may include the mobility management signaling or session management signaling, such as the number of times for the attach request, the number of times for the PDP context activation request, the number of times for the location update request, or the number of times for the PDN connectivity establishment request, the specific method may be that according to the number of times by which the user equipment initiates the signaling, in which the signaling may specifically be a group identifier corresponding to the user equipment of the attach request, the PDP context activation request, the location update request, the PDN connectivity establishment request, the measurement unit (the SGSN or the MME) measures the number of times by which all user equipments in the group corresponding to the group identifier send the attach request, the PDP context activation request, the location update request, and the PDN connectivity establishment request, the measurement unit reports the number of times for the attach request, for the PDP context activation request, for the location update request or for the PDN connectivity establishment request to the charging processing apparatus (such as, a charging center), and the charging processing apparatus generates charging data records according to the number of times for the attach request, the number of times for the PDP context activation request, the number of times for the location update request, or the number of times for the PDN connectivity establishment request reported by the measurement unit, and corresponding charging rates. Optionally, if the user equipments under the group access from different SGSNs or MMEs, after the different SGSNs or MMEs report the measured number of times by which the user equipments under the group initiate the attach request, the PDP context activation request, the location update request or the PDN connectivity establishment request to the charging processing apparatus, the charging processing apparatus combines the reported number of times for the attach request, the PDP context activation request, the location update request, or the PDN connectivity establishment request according to the group identifier to generate charging data records. Also, the SGSN or the MME may generate charging data records according to the measured number of times by which the user equipments under the group initiate the attach request, the PDP context activation request, the location update request or the PDN connectivity establishment request, and the SGSN or the MME reports the generated charging data records to the charging processing apparatus. If all user equipments under the group access from different SGSNs or MMEs or PGWs or GGSNs, the different SGSNs or MMEs or PGWs or GGSNs measure the number of times for the attach request, the number of times for the PDP context activation request, the number of times for the location update request or the number of times for the PDN connectivity establishment request for the user equipments under this group to generate charging data records (the charging data record further may include the group identifier), and report the generated charging data records to the charging processing apparatus, the charging processing apparatus may combine the charging data records according to the charging key (Charging Key) or the group identifier (the group identifier carried in the charging data record, or the group identifier obtained through other processes, such as, a PDN establish process), to generate a final charging data record of the group.

If the event measurement method is to measure the number of PDP (bearer) contexts of all user equipments of the group, measure the number of the user equipments of the group or measure the number of datagrams sent by all user equipments of the group, the specific method may be that according to the group identifier of the group, the measurement unit (the PGW or the GGSN or the SGSN or the MME) measures the number of PDP (bearer) contexts of the user equipments under the group corresponding to the group identifier, measures the number of all user equipments under the group or measures the number of datagrams sent by all user equipments under the group, and the measurement unit reports, to the charging processing apparatus (such as, the charging center), the measured number of PDP (bearer) contexts, the measured number of all user equipments under the group or the measured number of datagrams sent by all user equipments under the group, and the charging processing apparatus generates a charging data record according to the number of PDP (bearer) contexts of the user equipments under the group, the number of all user equipments under the group or the number of datagrams sent by all user equipments under the group reported by the measurement unit. Optionally, if the user equipments under the group access from different SGSNs or MMEs or GGSNs or PGWs, after the different SGSNs or MMEs or GGSNs or PGWs report, to the charging processing apparatus, the measured number of PDP (bearer) contexts of the user equipments under the group, the measured number of all user equipments under the group or the measured number of datagrams sent by all user equipments under the group, and the charging processing apparatus combines, according to the group identifier, the reported number of PDP (bearer) contexts of the user equipments under the group, the reported number of user equipments under the group or the reported number of datagrams sent by all user equipments under the group to generate a charging data record. Also, the SGSN or the MME or the GGSN or the PGW may generate a charging data record according to the measured number of PDP (bearer) contexts of the user equipments under the group, the measured number of all user equipments under the group or the measured number of datagrams sent by all user equipments under the group, and the SGSN or the MME or the PGW or the GGSN reports the generated charging data record to the charging processing apparatus. If all user equipments under the group access from different SGSNs or MMEs or PGWs or GGSNs, the different SGSNs or MMEs or PGWs or GGSNs measure the number of PDP (bearer) contexts of the user equipments under the group, the number of all user equipments under the group or the number of datagrams sent by all user equipments under the group to generate a charging data record (the charging data record may further include the group identifier), and report the generated charging data record to the charging processing apparatus, the charging processing apparatus may combine the charging data records according to the charging key or the group identifier (the group identifier carried in the charging data record, or the group identifier obtained through other processes, such as, a PDN establish process), to generate a final charging data record of the group.

The measurement method may be embodied in the charging rule, or may be subscribed in subscription data, for example, in an HSS or Group subscription database, charging measuring is performed on subscription according to the duration measurement method, the traffic measurement method or the event measurement method; if in the subscription data, subscription is performed according to the event measurement method, a specific measurement event needs to be indicated, such as measuring the number of times for the attach request of all user equipments under the group, the number of times for the PDP context activation request, the number of times for the location update request, the number of times for the PDN connectivity establishment request, the number of PDP (bearer) contexts, the number of the user equipments of the group or the number of datagrams sent by all user equipments of the group. In an attach process or a PDN connectivity establishment process initiated by the user equipment of the group, the MME or the SGSN obtains the measuring method, and sends the measuring method to the PGW or the GGSN in the create PDP context request (Create PDP Context Request) message or the create session request (Create Session Request) message. The measuring method may also be configured on the SGSN or the MME or the PGW or the GGSN, for example, corresponding measuring methods are configured corresponding to different group identifiers, and after the SGSN or the MME or the PGW or the GGSN obtains the group identifier of the user equipment, the SGSN or the MME or the PGW or the GGSN performs measuring according to a corresponding measuring method. If the configured measuring method is the event measurement method, a specific measurement event needs to be indicated, such as measuring the number of times for the attach request of all user equipments under the group, the number of times for the PDP context activation request, the number of times for the location update request, the number of times for the PDN connectivity establishment request, the number of PDP (bearer) contexts, the number of the user equipments of the group or the number of datagrams sent by all user equipments of the group.

The measuring method provided in the embodiment is likewise applicable to other specific embodiments of the present invention.

In this embodiment, the group identifier may be an identifier of a group to which a terminal belongs, or be an identifier (an identity or a charging key) shared by multiple terminals under a scenario that the multiple terminals share an identifier, or other identifier information indicating the charging group; for example, a group to which the user equipments belongs or a user group is identified through an APN (Access Point Name), the APN is an identifier of the group to which the user equipment belongs or the user group, and in this embodiment, the group identifier is not limited. In this embodiment, a group may be a user equipment group or M2M industry users (MTC User) or M2M application subscribers (MTC Subscriber) or another group formed by multiple devices, and this patent is not limited thereto.

When the method in the embodiment of the present invention is applied to online charging, and the charging processing apparatus sends a credit request message (Credit Request) to an online charging system, the charging key and optionally, the group identifier, may be carried in the credit request message, and the charging processing apparatus performs a credit request according to the group identifier, that is, performs the credit request according to the group granularity. For example, if the charging processing apparatus (the PGW or the GGSN or the SGW) measures that the total traffic of the user equipments in the group reaches a certain credit, the charging processing apparatus (the PGW or the GGSN or the SGW) sends a credit request message (Credit Request) to the online charging system to request a new credit, and the charging key, and optionally the group identifier may be carried in the credit request message. The online charging system returns a credit response message (Credit Response), and the message includes the credit requested by the charging processing apparatus (the PGW or the GGSN or the SGW).

Additionally, During the foregoing online charging application, if a certain industry user is overdue, the online charging system sends an overdue notification message including the group identifier to the charging processing apparatus, or the online charging system indicates that the industry user is overdue in the credit response message (Credit Response), the charging processing apparatus disposed in the PGW, the GGSN or the SGW sets gateway state in a PCC rule of the user equipments in the group to be turn-off, or deletes a bearer of the user equipments in the group.

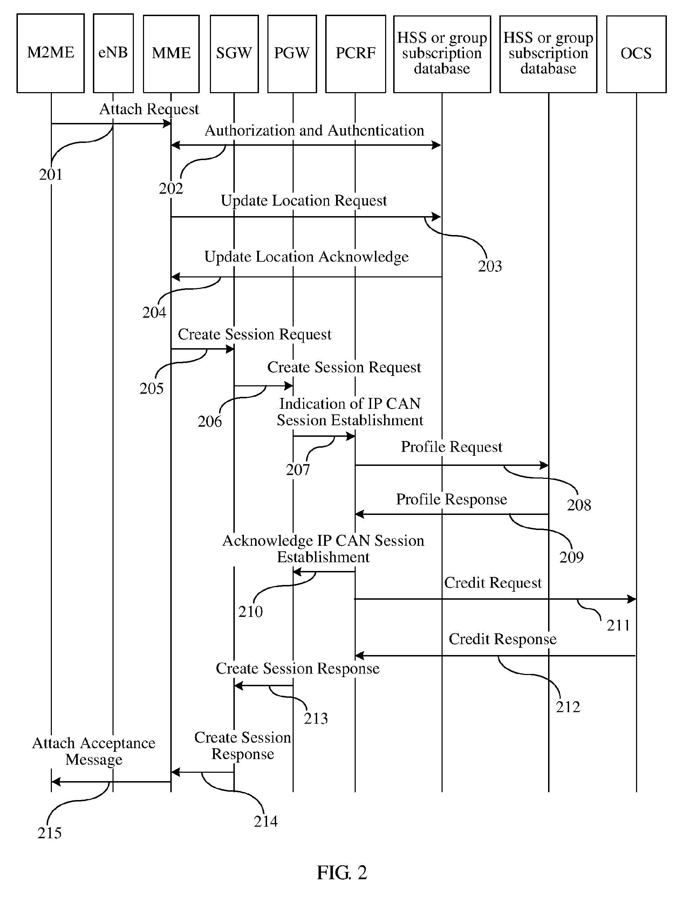

FIG. 2 is a schematic flowchart of a first specific embodiment of a group charging method according to the present invention; this embodiment implements group charging with an M2M application, and specifically in an attach procedure of an M2ME which may also be other user equipments, and as shown in FIG. 2, the group charging method includes the following steps.

Step 201: The M2ME sends an attach request message (Attach Request) to an MME, in which identity information of the M2ME may be carried in the attach request message, and optionally, the M2ME may carry a group identifier in the attach request message.

Step 202: Execute an authorization and authentication process.

Step 203: The MME sends an update location request message (Update Location Request) to a home subscriber server (Home Subscriber Server, HSS for short below) or a group (group) subscription database. If the MME obtains the group identifier of the M2ME in the attach request message, the MME carries the group identifier in the update location request message.

Step 204: The HSS or the Group subscription database returns an update location acknowledgment message (Update Location Acknowledge). The HSS returns subscription data information in the update location acknowledgment message. Optionally, the update location acknowledgment message includes the group identifier, or the subscription data information includes indication information indicating group charging, for example, a field of a charging characteristic (Charging characteristic) indicates the group charging.

Step 205: The MME sends a create session request message (Create Session Request) to the SGW. If the MME obtains the group identifier of the M2ME, such as, obtains the group identifier in the attach request message or the update location acknowledgment message, the group identifier may be carried in the create session request message. If the indication information for group charging is obtained in step 204, the indication information for group charging may be carried in the create session request message.

Step 206: The SGW sends the create session request message (Create Session Request) to the PGW. If the SGW obtains the group identifier of the M2ME in step 205, the group identifier may be carried in the create session request message. If the indication information for group charging is obtained in step 205, the indication information for group charging may be carried in the create session request message.

Step 207: In a dynamic policy charging control (Policy Charging Controller, PCC for short below) application, the PGW sends an IP CAN session establishment indication message (Indication of IP CAN Session Establishment) to a PCRF. If the PGW obtains the group identifier of the M2ME in step 206, the group identifier may be carried in the IP CAN session establishment indication message. Optionally, if the PGW obtains the indication information for group charging in step 206, the PGW may carry the indication information for group charging in the IP CAN session establishment indication message; during a static PCC application, step 207 to step 210 are not executed.

Step 208: The PCRF sends a profile information request message (Profile Request) to a service processor (SPR) or a group subscription database, and if the PCRF obtains the group identifier of the M2ME in step 207, the PCRF carries the group identifier in the profile information request message.

Step 209: The SPR or the Group subscription database returns a profile information response message (Profile Response). The SPR or the Group subscription database returns service subscription data of the M2ME in the profile information response message. Optionally, this message includes the group identifier of the M2ME, and the service subscription data includes the indication information indicating group charging.

Step 210: The PCRF returns an IP CAN session establishment acknowledgment message (Acknowledge IP CAN Session Establishment) to the PGW, in which a PCC rule is carried in the message and the PCC rule includes the charging rule, and a group charging method is embodied in the charging rule, and includes the following steps:

a) the PCRF allocates a charging key (Charging Key) in the charging rule according to the group identifier which specifically is the group identifier of the M2ME obtained by the PCRF, and allocates the same charging key to terminals having the same group identifier when the charging rule is generated, that is, when a second M2ME initiates default bearer establishment with respect to the same APN, and the group identifier of the second M2ME is the same as the group identifier of a first M2ME, the PCRF generates a charging rule for the second M2ME, and the charging key (Charging Key) in the charging rule is the same as the charging key in the charging rule generated by the first M2ME. Additionally, the charging key used by the M2ME may be generated with respect to M2ME granularity, and the PCRF notifies, in the charging rule, the PGW or the SGW of the charging key used by the M2ME; further, the PGW or the SGW generates, according to the group identifier of the M2ME, the charging key used by the industry user (that is, the PGW or the SGW generates a charging key for M2MEs having the same group identifier), and the PGW and the SGW notify a charging system of the charging key used by the industry user; after the charging system receives the charging key of the industry user, the charging system performs charging processing on the industry user according to the charging key of the industry user, the charging key used by the M2ME may be sent to another system (such as, a legal monitoring system), and another system performs processing at an M2ME level according to the charging key; by disposing charging keys on two levels, not only the industry user charging processing of the charging system may be implemented, but also processing performed by another system in dependence on the charging key is not influenced. The process for generating the charging key used by the industry user is optional, the PCRF may generate the charging key used by the M2ME with respect to the M2ME granularity, the PCRF notifies the PGW or the SGW of the charging key used by the M2ME in the charging rule, and the PGW or the SGW provides the charging key used by the M2ME to the charging system; or

b) in the charging rule, in addition to indicating online charging or offline charging, the charging method (Charging Method) may further indicate group charging (Group Based Charging); or

c) the PCRF may further set the group identifier in the charging rule when the charging rule is generated.

In this step, when the charging rule is generated, the PCRF may, according to the indication information for group charging obtained in the step 207 and step 209 or according to obtained group charging key of the M2ME, formulates a charging rule on the basis of group charging according to profile properties (program setting).

Step 211: during an online charging application, the PGW sends a credit request message (Credit Request) to an online charging system OCS, in which the credit request message carries the charging key and may further carry the group identifier. The PGW performs a credit request according to the group identifier, that is, performs a credit request according to group granularity; for example, when the PGW measures data traffic, the PGW measures data traffic generated by all M2MEs having the same group identifier.

Step 212: The OCS returns a credit response message (Credit Response).

Step 213: The PGW sends a create session response message (Create Session Response) to the SGW; optionally, the message includes the PCC rule obtained by the PGW (including the charging rule), and during a static PCC application, the PGW allocates a static PCC rule according to profile information, and the method for formulating the charging rule in the PCC rule is consistent with that in step 210, and is not repeated herein.

The PGW generates a charging data record according to the obtained charging rule. If the PGW obtains the charging rule delivered by the second M2ME, and the charging key in the charging rule is the same as the charging key in the charging rule of the first M2ME, the PGW uses a charging data record generated for the first M2ME. A premise of this characteristic is that the first M2ME and the second M2ME have the same group identifier, that is, the first M2ME and the second M2ME belong to the same charging group. Optionally, corresponding to option description of the characteristic a) in step 210, with respect to the M2ME granularity, the PGW or the SGW or the PCRF may also generate the Charging Key used by the M2ME; further, with respect to the industry user to which the M2ME belongs, the PGW or the SGW or the PCRF generates the Charging Key used by the industry user, the PGW or the SGW may generate a charging data record according to the Charging Key used by the industry user, or the PGW or the SGW may generate a charging data record for the M2ME according to the Charging Key used by the M2ME. Optionally, the PGW or the SGW includes, in the charging data record, identifier information about a group to which the user equipment belongs. Optionally, the PGW or the SGW generates a charging data record including the group identifier for each M2ME in the group according to a charging rule, and combines the charging data records according to the group identifier; the PGW or the SGW generates charging data records of M2MEs in the group according to charging rules, and combines the charging data records according to the charging identifier; the PGW or the SGW generates charging data records of the M2MEs in the group according to the charging rules, and combines, according to the group identifier, the charging data records of user equipments belonging to the same group.

Step 214: The SGW sends the create session response message to the MME. Optionally, the SGW generates a charging data record according to the charging rule.

Step 215: The MME sends an attach acceptance message to the M2ME.

In this embodiment, the PGW, the SGW or the charging system combines charging data records according to the charging key and optionally the group identifier, so that the user equipments of the group can be charged, and the overhead of network resources can be reduced.

Additionally, during the online charging, if an industry user is overdue, the OCS sends an overdue notification message including the group identifier to the PGW, or the online charging system indicates that the industry user is overdue in the credit response message (Credit Response), and the PGW executes the following processing:

1) gateway states in the PCC rule of all M2MEs having the group identifier are set to be turn-off, and the PGW discards data of a corresponding bearer; or

2) the PGW initiates a bearer deletion process to delete bearers of all M2MEs having the group identifier. If the application is the dynamic PCC application, the PGW sends an IP CAN session termination indication message (Indication of IP CAN Session Termination) to the PCRF. An identifier of the PCC rule and optionally the group identifier of the user equipment are carried in the message. The PCRF deletes a corresponding PCC rule, and optionally, the PCRF deletes a PCC rule corresponding to the user equipment under the group according to the group identifier of the user equipment and the identifier of the PCC rule.

In this embodiment, if subscription data in an HSS, subscription data in an SPR or subscription data in a Group subscription database are subscribed according to the group granularity, the sending may be performed according to the group granularity in step 203 or step 208; a specific demonstration manner is that the group identifier corresponding to the M2ME is carried in the update location request message (Update Location Request) or the profile information request message (Profile Request), and the HSS or the SPR returns group subscription data according to the group identifier in the message. That is, when the first M2ME is attached to a network, the MME or the PCRF obtains subscription data for the first M2ME; when the second M2ME is attached to the network, and the second M2ME and the first M2ME belong to a group (such as, the first M2ME and the second M2ME have the same group identifier or share an identifier), the MME or the PCRF uses the subscription data, which is obtained for the first M2ME, as the subscription data of the second M2ME.

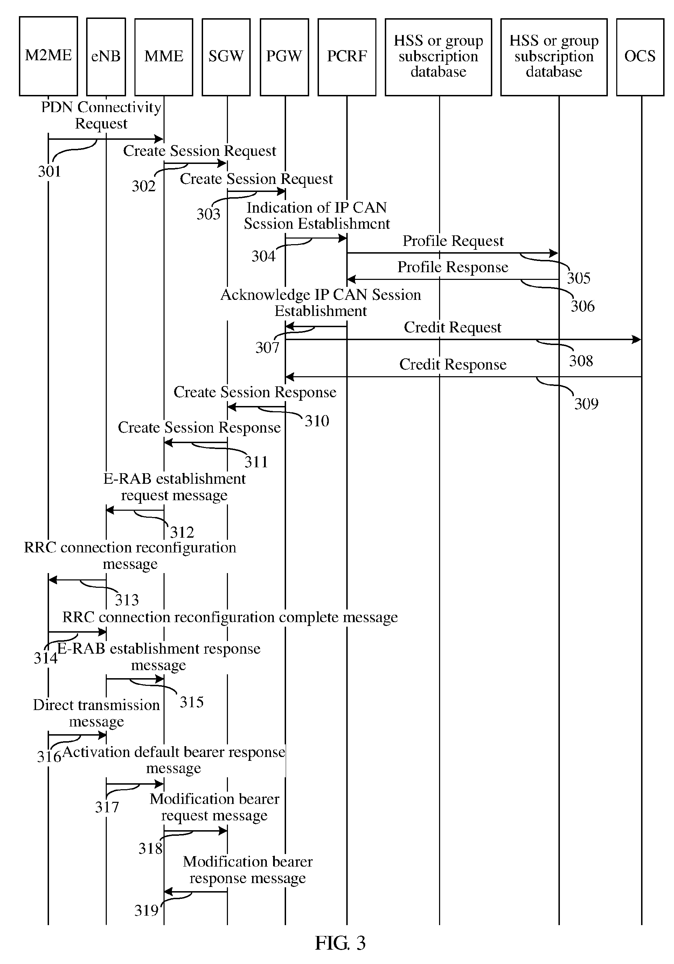

FIG. 3 is a schematic flowchart of a second specific embodiment of a group charging method according to the present invention; this embodiment implements group charging with an M2M application, and specifically in a PDN connectivity establishment procedure, and as shown in FIG. 3, the group charging method includes the following steps.

Step 301: an M2ME sends a PDN connectivity establishment request message (PDN Connectivity Request) to an MME. information such as an APN, and a group identifier may be carried in the message.

Step 302: The MME sends a create session request message (Create Session Request) to an SGW. Optionally, if the MME obtains a group identifier of the M2ME, such as, obtains in step 301 or a previous attach process, the group identifier may be carried in the create session request message. Optionally, if indication information for group charging with respect to an APN is obtained in subscription data, the indication information for group charging may be carried in the create session request message.

Step 303: The SGW sends the create session request message to a PGW. Optionally, if the SGW obtains the group identifier of the M2ME, the group identifier may be carried in the create session request message. Optionally, if the indication information for group charging is obtained in step 302, the indication information for group charging may be carried in the create session request message.

Step 304: If the application is the dynamic PCC application, the PGW sends an IP CAN session establishment indication message (Indication of IP CAN Session Establishment) to a PCRF. Optionally, if the PGW obtains the group identifier of the M2ME in step 303, the group identifier may be carried in the IP CAN session establishment indication message. If the application is the static PCC application, content of step 304 to step 307 may be omitted.

Step 305: The PCRF sends a profile information request message (Profile Request) to a SPR or a Group subscription database, and optionally, if the PCRF obtains the group identifier of the M2ME in step 304, the PCRF carries the group identifier in the profile information request message.

Step 306: The SPR or the Group subscription database returns a profile information response message (Profile Response). The SPR or the Group subscription database returns service subscription data of the M2ME in the profile information response message. Optionally, this message includes the group identifier of the M2ME, and the service subscription data includes the indication information indicating group charging.

Step 307: The PCRF returns an IP CAN session establishment acknowledgment message (Acknowledge IP CAN Session Establishment) to the PGW, in which a PCC rule is carried in the message, and the PCC rule includes a charging rule; and a method for embodying group charging in the charging rule in this step may be the same as that of step 210 in the foregoing embodiment; additionally, if the subscription data in step 306 includes the indication information of group charging, the indication information of group charging is carried in the IP CAN session establishment acknowledgment message sent in this step.

Step 308: During an online charging application, the PGW sends a credit request message (Credit Request) to an online charging system OCS, in which the credit request message carries a charging key, and may further carry the group identifier. The PGW performs a credit request according to the group identifier, that is, performs a credit request according to group granularity; for example, when the PGW measures data traffic, the PGW measures data traffic generated by all M2MEs having the same group identifier.

Step 309: The OCS returns a credit response message (Credit Response).

Step 310: The PGW sends a create session response message to the SGW; the message includes the PCC rule obtained by the PGW (including the charging rule), and during a static PCC application, the PGW allocates a static PCC rule according to profile information, and the method for formulating the charging rule in the PCC rule is consistent with that in step 210, and is not repeated herein.

The PGW generates a charging data record according to the obtained charging rule. If the PGW obtains a charging rule delivered by a second M2ME, and the charging key in the charging rule of the second M2ME is the same as the charging key in a charging rule of a first M2ME, the PGW uses a charging data record generated for the first M2ME. A premise of this characteristic is that the first M2ME and the second M2ME have the same group identifier, that is, the first M2ME and the second M2ME belong to the same charging group. Optionally, corresponding to option description of the characteristic a) in step 210, with respect to M2ME granularity, the PGW or the SGW or the PCRF may also generate the Charging Key used by the M2ME; further, with respect to an industry user to which the M2ME belongs, the PGW or the SGW or the PCRF generates the Charging Key used by the industry user, the PGW or the SGW may generate a charging data record according to the Charging Key used by the industry user, or the PGW or the SGW may generate a charging data record for the M2ME according to the Charging Key used by the M2ME. Optionally, the PGW or the SGW includes identifier information about a group to which the user equipment belongs in the charging data record. Optionally, the PGW or the SGW generates a charging data record including the group identifier for each M2ME in the group according to the charging rule, and combines the charging data records according to the group identifier; or the PGW or the SGW generates charging data records of M2MEs in the group according to the charging rules, and combines the charging data records according to the charging identifier, or the PGW or the SGW generates charging data records of the M2MEs in the group according to the charging rules, and combines, according to the group identifier, the charging data records of the user equipments belonging to the same group.

Step 311: The SGW sends the create session response message to the MME. Optionally, the SGW generates a charging data record according to the charging rule.

Step 312: The MME sends an E-RAB establishment request message to an eNodeB, in which an activation default bearer request message sent to the M2ME is carried in the message.

Step 313: The eNodeB sends an RRC connection reconfiguration message to the M2ME.

Step 314: The M2ME returns an RRC connection reconfiguration complete message to the eNodeB.

Step 315: The eNodeB sends an E-RAB establishment response message to the MME.

Step 316: The M2ME sends a direct transmission message to the eNodeB, in which an activation default bearer response message is carried in the message.

Step 317: The eNodeB transfers the activation default bearer response message to the MME.

Step 318: The MME sends a modification bearer request message to the SGW.

Step 319: The SGW returns a modification bearer response message to the MME.

In this embodiment, the PGW, the SGW or a charging system combines charging data records according to the charging key and optionally the group identifier, to implement group charging.

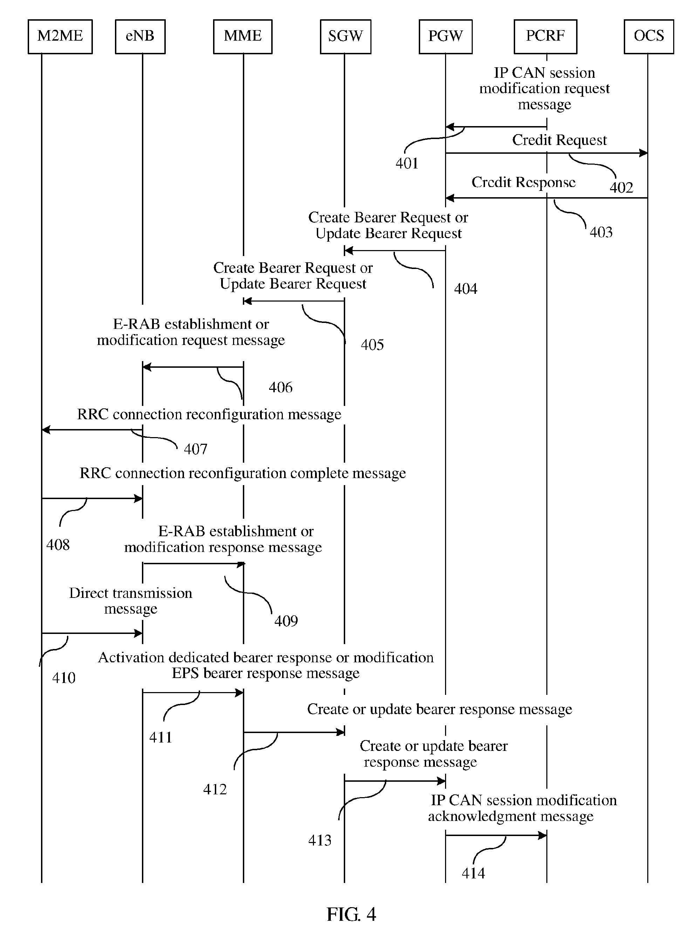

FIG. 4 is a schematic flowchart of a third specific embodiment of a group charging method according to the present invention; this embodiment implements group charging with an M2M application, and specifically in a process that a PGW initiates dedicated bearer establishment, and as shown in FIG. 4, the group charging method includes the following steps.

Step 401: A PCRF sends an IP CAN session modification request message (Policy and Charging Rules Provision) to a PGW, in which a PCC rule (including a charging rule) is carried in the message. The group charging method is embodied in the charging rule, in which the PCRF may obtain a group identifier or a field of a charging characteristic in an attach process or a PDN connectivity establishment process, which includes:

a) the PCRF allocates a charging key (Charging Key) in the charging rule according to the group identifier which specifically is an group identifier that is of an M2ME and is obtained by the PCRF, and allocates the same charging key to terminals having the same group identifier when the charging rule is generated, that is, when a second M2ME triggers the PCRF to initiate an IP CAN session modification process with respect to the same SDF (Service Data Flow), and the group identifier of the second M2ME is the same as the group identifier of a first M2ME, the PCRF generates a charging rule for the second M2ME, and the charging key (Charging Key) in the charging rule is the same as the charging key in the charging rule generated by the first M2ME. Additionally, the charging key used by the M2ME may be generated with respect to M2ME granularity, and the PCRF notifies a PGW or a SGW of the charging key used by the M2ME in the charging rule; further, the PGW or the SGW generates, according to the group identifier of the M2ME, the charging key used by an industry user (that is, the PGW or the SGW generates a charging key for M2MEs having the same group identifier), and the PGW and the SGW notify a charging system of the charging key used by the industry user; after the charging system receives the charging key of the industry user, the charging system performs charging processing on the industry user according to the charging key of the industry user, the charging key used by the M2ME may be sent to another system (such as, a legal monitoring system), and another system performs processing at an M2ME level according to the charging key; by disposing charging keys on two levels, not only the industry user charging processing of the charging system may be implemented, but also processing performed by another system in dependence on the charging key is not influenced. The process for generating the charging key used by the industry user is optional, the PCRF may generate, with respect to the M2ME granularity, the charging key used by the M2ME, the PCRF notifies the PGW or the SGW of the charging key used by the M2ME in the charging rule, and the PGW or the SGW provides, to the charging system, the charging key used by the M2ME; or

b) in the charging rule, in addition to indicating online charging or offline charging, the charging method (Charging Method) may further indicate group charging (Group Based Charging); or

c) the PCRF may further set the group identifier in the charging rule when the charging rule is generated.

Step 402: During an online charging application, the PGW sends a credit request message (Credit Request) to an online charging system OCS, in which the credit request message carries the charging key, and may further carry the group identifier. The PGW performs a credit request according to the group identifier, that is, performs a credit request according to group granularity; for example, when the PGW measures data traffic, the PGW measures data traffic generated by all M2MEs having the same group identifier, so as to obtain information such as remaining duration or traffic and implement charging control within a credit range.

Step 403: The OCS returns a credit response message (Credit Response).

Step 404: The PGW sends a create bearer request message or an update bearer request message (Create Bearer Request or Update Bearer Request) to the SGW.

The PGW generates a charging data record according to the obtained charging rule. In the charging data record, the PGW provides the group identifier of the M2ME. If the PGW obtains a charging rule delivered by a second M2ME, and the charging key in the charging rule of the second M2ME is the same as the charging key in the charging rule of a first M2ME, the PGW uses a charging data record generated for the first M2ME. A premise of this characteristic is that the first M2ME and the second M2ME have the same group identifier, that is, the first M2ME and the second M2ME belong to the same charging group. Optionally, corresponding to option description of the characteristic a) in step 401, with respect to M2ME granularity, the PGW, the SGW or the PCRF may also generate the Charging Key used by the M2ME; further, with respect to the industry user to which the M2ME belongs, the PGW or the SGW or the PCRF generates the Charging Key used by the industry user, the PGW or the SGW may generate a charging data record according to the Charging Key used by the industry user, or the PGW or the SGW may generate a charging data record for the M2ME according to the Charging Key used by the M2ME. Optionally, the PGW or the SGW includes identifier information about a group to which the user equipment belongs in the charging data record. Optionally, the PGW or the SGW generates a charging data record including the group identifier for each M2ME in the group according to the charging rule, and combines the charging data records according to the group identifier; or the PGW or the SGW generates charging data records of M2MEs in the group according to the charging rules, and combines the charging data records according to the charging identifier, or the PGW or the SGW generates charging data records of the M2MEs in the group according to the charging rules, and combines, according to the group identifier, the charging data records of the user equipments belonging to the same group.

Step 405: The SGW sends the create bearer request message or the update bearer request message to the MME. Optionally, the method that the SGW generates a charging data record according to the charging rule is the same as the method that the PGW generates a charging data record according to the charging rule, and is not repeated herein.

Step 406: The MME sends an E-RAB establishment or modification request message to an eNodeB, in which an activation dedicated bearer request message or a modification EPS bearer request message sent to the M2ME is carried in the message.

Step 407: The eNodeB sends an RRC connection reconfiguration message to the M2ME.

Step 408: The M2ME returns an RRC connection reconfiguration complete message to the eNodeB.

Step 409: The eNodeB sends an E-RAB establishment or modification response message to the MME.

Step 410: The M2ME sends a direct transmission message to the eNodeB, in which the activation dedicated bearer response message or the modification EPS bearer response message is carried in the message.

Step 411: The eNodeB transfers the activation dedicated bearer response message or the modification EPS bearer response message to the MME.

Step 412: The MME returns a create bearer response message or an update bearer response message to the SGW.

Step 413: The SGW returns the create bearer response message or the update bearer response message to the PGW.

Step 414: The PGW returns an IP CAN session modification acknowledgment message to the PCRF.

In this embodiment, the PGW, the SGW or a charging system combines charging data records according to the charging key and optionally the group identifier, so that the user equipments of the group can be charged and the overhead of network resources can be reduced.

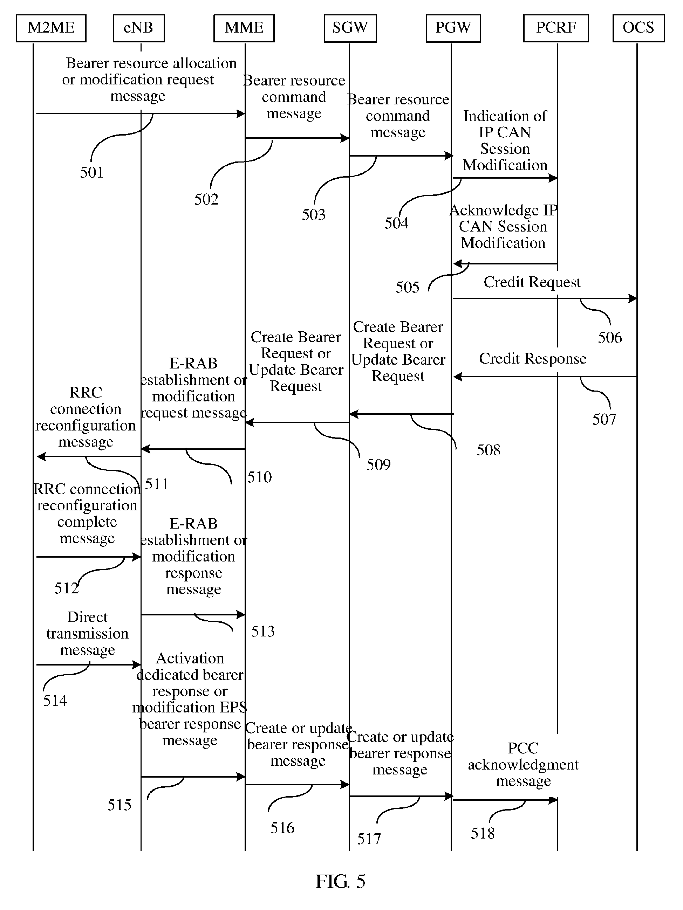

FIG. 5 is a schematic flowchart of a fourth specific embodiment of a group charging method according to the present invention; this embodiment implements group charging with an M2M application, and specifically in a process that the M2ME initiates resource modification, and as shown in FIG. 5, the group charging method includes the following steps.

Step 501: An M2ME sends a bearer resource allocation or modification request message to an MME.

Step 502: The MME sends a bearer resource command message to an SGW.

Step 503: The SGW sends the bearer resource command message to a PGW.

Step 504: If the application is the dynamic PCC application, the PGW sends an IP CAN session modification indication message (Indication of IP CAN Session Modification) to a PCRF. During the static PCC application, both step 505 and step 518 following this step are omitted.

Step 505: The PCRF sends an IP CAN session modification acknowledgment message (Acknowledge IP CAN Session Modification) to the PGW, in which a PCC rule (including a charging rule) is carried in the message. A group charging method is embodied in the charging rule, and includes the following steps:

a) the PCRF allocates the charging key (Charging Key) in the charging rule according to a group identifier which specifically is the group identifier that is of the M2ME and is obtained by the PCRF, and allocates the same charging key to terminals having the same group identifier when the charging rule is generated, that is, when a second M2ME triggers the PCRF to initiate an IP CAN session modification process with respect to the same SDF (Service Data Flow), and a group identifier of the second M2ME is the same as the group identifier of a first M2ME, the PCRF generates a charging rule for the second M2ME, and the charging key (Charging Key) in the charging rule is the same as the charging key in the charging rule generated by the first M2ME. Additionally, the charging key used by the M2ME may be generated with respect to M2ME granularity, and the PCRF notifies the PGW or the SGW of the charging key used by the M2ME in the charging rule; further, the PGW or the SGW generates, according to the group identifier of the M2ME, a charging key used by an industry user (that is, the PGW or the SGW generates a charging key for M2MEs having the same group identifier), and the PGW and the SGW notify a charging system of the charging key used by the industry user; after the charging system receives the charging key of the industry user, the charging system performs charging processing on the industry user according to the charging key of the industry user, the charging key used by the M2ME may be sent to another system (such as, a legal monitoring system), and another system performs processing at an M2ME level according to the charging key; by disposing charging keys on two levels, not only the industry user charging processing of the charging system may be implemented, but also processing performed by another system in dependence on the charging key is not influenced. The process for generating the charging key used by the industry user is optional, the PCRF may generate, with respect to M2ME granularity, the charging key used by the M2ME, the PCRF notifies the PGW or the SGW of the charging key used by the M2ME in the charging rule, and the PGW or the SGW provides, to the charging system, the charging key used by the M2ME; or

b) in the charging rule, in addition to indicating online charging or offline charging, the charging method (Charging Method) may further indicate group charging (Group Based Charging); or

c) the PCRF may further set the group identifier in the charging rule when the charging rule is generated.

Step 506: During an online charging application, the PGW sends a credit request message (Credit Request) to an online charging system OCS, in which the credit request message carries the charging key and may further carry the group identifier. The PGW performs a credit request according to the group identifier, that is, performs a credit request according to group granularity; for example, when the PGW measures data traffic, the PGW measures data traffic generated by all M2MEs having the same group identifier, so as to obtain information such as remaining duration or traffic and implement group charging control within a credit range.

Step 507: The OCS returns a credit response message (Credit Response).

Step 508: The PGW sends a create bearer request message or an update bearer request message (Create Bearer Request or Update Bearer Request) to the SGW.

The PGW generates a charging data record according to the obtained charging rule. In the charging data record, the PGW provides the group identifier of the M2ME. If the PGW obtains the charging rule delivered by the second M2ME, and the charging key in the charging rule of the second M2ME is the same as the charging key in the charging rule of the first M2ME, the PGW uses a charging data record generated for the first M2ME. A premise of this characteristic is that the first M2ME and the second M2ME have the same group identifier, that is, the first M2ME and the second M2ME belong to the same charging group. Optionally, corresponding to option description of the characteristic a) in step 505, with respect to the M2ME granularity, the PGW, the SGW or the PCRF may also generate the Charging Key used by the M2ME; further, with respect to the industry user to which the M2ME belongs, the PGW or the SGW or the PCRF generates the Charging Key used by the industry user, the PGW or the SGW may generate a charging data record according to the Charging Key used by the industry user, or the PGW or the SGW may generate a charging data record for the M2ME according to the Charging Key used by the M2ME. Optionally, the PGW or the SGW includes, in the charging data record, identifier information about a group to which the user equipment belongs. Optionally, the PGW or the SGW generates a charging data record including the group identifier for each M2ME in the group according to the charging rule, and combines the charging data records according to the group identifier; or the PGW or the SGW generates charging data records of M2MEs in the group according to the charging rules, and combines the charging data records according to the charging identifier, or the PGW or the SGW generates charging data records of the M2MEs in the group according to the charging rules, and combines, according to the group identifier, the charging data records of the user equipment belonging to the same group.

Step 509: The SGW sends a create bearer request message or an update bearer request message (Create Bearer Request or Update Bearer Request) to the MME. Optionally, the method that the SGW generates a charging data record according to the charging rule is the same as the method that the PGW generates a charging data record according to the charging rule, and is not repeated herein.

Step 510: The MME sends an E-RAB establishment or modification request message to an eNodeB, in which an activation dedicated bearer request message or a modification EPS bearer request message sent to the M2ME is carried in the message.

Step 511: The eNodeB sends an RRC connection reconfiguration message to the M2ME.

Step 512: The M2ME returns an RRC connection reconfiguration complete message to the eNodeB.

Step 513: The eNodeB sends an E-RAB establishment or modification response message to the MME.

Step 514: The M2ME sends a direct transmission message to the eNodeB, in which the activation dedicated bearer response message or the modification EPS bearer response message is carried in the message.

Step 515: The eNodeB transfers the activation dedicated bearer response message or the modification EPS bearer response message to the MME.

Step 516: The MME returns a create bearer response message or an update bearer response message to the SGW.

Step 517: The SGW returns the create bearer response message or the update bearer response message to the PGW.

Step 518: The PGW sends a PCC acknowledgment message to the PCRF.

In this embodiment, the PGW, the SGW or a charging system combines charging data records according to the charging key and optionally the group identifier, so that the user equipments in the group can be charged and the overhead of network resources can be reduced.

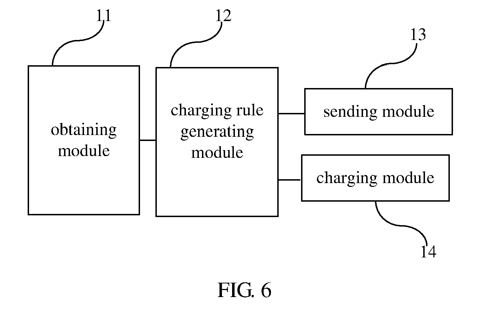

FIG. 6 is a schematic structural diagram of an embodiment of a charging processing apparatus according to the present invention, and as shown in FIG. 6, the charging processing apparatus includes an obtaining module 11 and a charging rule generating module 12, in which the obtaining module 11 is configured to obtain at least one of a group identifier and a field of a charging characteristic of a user equipment; and the charging rule generating module 12 is configured to generate a charging rule according to the obtained at least one of the group identifier and the field of the charging characteristic; and additionally, may further include a sending module 13 or a charging module 14, in which the sending module 13 is configured to send the charging rule to a charging network element, and the charging network element charges user equipments in a group according to charging rules; here, it is a case that the corresponding function of generating the charging rule and the function of performing charging according to the charging rules are not implemented in one network element. The charging module 14 is configured to charge user equipments in a group according to charging rules, and in this case, the function of generating the charging rule and the function of performing charging according to the charging rules are both implemented in one network element, such as in a PCRF or a PGW.

In this embodiment, the obtaining module obtains the group identifier of the user equipment, and the charging rule is generated according to the group identifier, and the user equipments in the group are charged according to the charging rules, so that efficiency of charging the user equipments in the group can be improved, and the overhead of network resources can be reduced. In the embodiment of the present invention, the charging processing apparatus may be singly disposed in a network element, such as a PGW, a GGSN, an SGW, a PCRF, an OCS or an OFCS, or multiple network elements may cooperatively complete the function of the charging module. That is, the charging rule generating module is disposed in the PCRF, and the charging module is disposed in the PGW, the GGSN, the SGW, the OCS or the OFCS.

In the embodiment, the charging rule generating module may include a first rule generating unit, configured to allocate charging rules having the same charging key to user equipments having the same group identifier; and the charging module includes a first charging unit, in which the first charging unit is configured to generate, according to the charging rules, a group charging data record for corresponding user equipments having the same group identifier; or to generate, according to the charging rules, charging data records including the group identifier for the user equipments in the group, and combine the charging data records according to the group identifier; or to generate charging data records of the user equipments in the group according to the charging rules, and combine the charging data records according to the charging key.

Additionally, in the embodiment, the charging rule generating module may further include a second rule generating unit, configured to generate a charging rule including a group identifier; and the charging module includes a second charging unit, in which the second charging unit is configured to generate, according to the charging rules, charging data records including the group identifier, and combine the charging data records according to the group identifier; or to generate charging data records of the user equipments in the group according to the charging rules, and combine, according to the group identifier, the charging data records of the user equipments belonging to the same group.

Additionally, in the embodiment, the charging rule generating module may include a fourth rule generating unit, configured to, according to the field of the charging characteristic, in a charging method for the charging rule, indicate that group charging is performed on the user equipments in the group; and the charging module includes a fourth charging unit, in which the fourth charging unit is configured to generate, according to the charging rules, charging data records including the group identifier for the user equipments in the group, and combine the charging data records according to the group identifier; or to generate charging data records of the user equipments in the group according to the charging rules, and combine, according to charging methods, the charging data records of the user equipments having the same group identifier.

In the embodiment, the charging processing apparatus may further include a first sending module, configured to send a credit request message including the group identifier to an online charging system, so that a credit request can be implemented according to the group granularity.

Additionally, the charging processing apparatus of the embodiment may further include an overdue processing module, in which the overdue processing module is configured to, after receiving an overdue notification message including the group identifier, set a gateway state in a PCC rule of the user equipments in the group to be turn-off, or delete a bearer of the user equipments in the group, so that an overdue problem of the user equipments in the group can be solved.

The charging module in the embodiment may be further categorized into a measurement unit and a charging unit, in which the measurement unit is configured to perform charging measurement according to a measurement method in the charging rule, in which the measurement method includes a duration measurement method, a traffic measurement method or an event measurement method; and the charging unit is configured to generate a charging data record according to the result of charging measurement performed by the measurement unit.

The measurement unit may include a first measurement sub-unit, in which the first measurement sub-unit is configured to measure the number of times by which all user equipments in the group initiate signaling; or measure the number of PDP (bearer) contexts sent by all user equipments in the group; or measure the number of the user equipments in the group; or measure the number of datagrams sent by all user equipments in the group. The signaling may include mobility management signaling or session management signaling, such as attach requests sent by all user equipments in the group; or PDN connectivity establishment requests sent by all user equipments in the group; or PDP activation requests sent by all user equipments in the group; or location update requests sent by all user equipments in the group.

An embodiment of the present invention further provides a communication system, the communication system includes the charging processing apparatus mentioned in the foregoing embodiment, which can implement group charging, improve efficiency of charging the user equipments in the group, and reduce the overhead of network resources.

In the communication system, a group charging module may be disposed in a packet data network gateway, a policy and charging rule function entity, a serving gateway or a charging system.

With the group charging method, the charging processing apparatus and the communication system provided by the embodiments of the present invention, a group identifier is set for user equipments in a group, at least one of a group identifier and a field of a charging characteristic is obtained when group charging is performed, a charging rule is generated according to the at least one of the group identifier and the field of the charging characteristic, and the user equipments in the group are charged according to the charging rule, so as to implement group charging, so that charging efficiency of charging user equipments in the group can be improved, and the overhead of network resources can be reduced.

It should be noted that the above embodiments are merely provided for illustrating the technical solutions of the present invention, but not intended to limit the present invention. Although the present invention has been illustrated in detail with reference to the foregoing embodiments, it is apparent that those skilled in the art can still make modifications or equivalent substitution to the technical solutions of the present invention, while these modifications or equivalent substitution cannot make the modified technical solutions depart from the spirit and scope of the invention.

## Claims

1. A group charging method, comprising:
obtaining at least one of a group identifier and a field of a charging characteristic of a user equipment;
generating a charging rule according to the obtained at least one of the group identifier and the field of the charging characteristic;
charging user equipments in a group according to charging rules.

2. The group charging method according to claim 1, wherein the generating the charging rule according to the obtained group identifier comprises:
allocating charging rules having a same charging key to user equipments having the same group identifier; and
the charging the user equipments in the group according to the charging rules comprises:
generating, according to the charging rules, a group charging data record for the user equipments having the same group identifier; or
generating, according to the charging rules, charging data records comprising the group identifier for the user equipments in the group, and combining the charging data records according to the group identifier; or
generating charging data records of the user equipments in the group according to the charging rules, and combining the charging data records according to the charging key.

3. The group charging method according to claim 1, wherein the generating the charging rule according to the obtained group identifier comprises:
generating the charging rule comprising the group identifier;
the charging the user equipments in the group according to the charging rules comprises:
generating, according to the charging rules, charging data records comprising the group identifier, and combining the charging data records according to the group identifier; or
generating charging data records of the user equipments in the group according to the charging rules, and combining, according to the group identifier, the charging data records of the user equipments belonging to the same group.

4. The group charging method according to claim 1, wherein the generating the charging rule according to the obtained group identifier comprises:
indicating, in charging rules, that charging methods performs group charging on user equipments having the same group identifier;
the charging the user equipments in the group according to the charging rules comprises:
generating, according to the charging rules, charging data records comprising the group identifier for the user equipments in the group, and combining the charging data records according to the group identifier; or
generating charging data records of the user equipments in the group according to the charging rules, and combining, according to the charging methods, the charging data records of user equipments having a same charging key.

5. The group charging method according to claim 1, wherein the generating the charging rule according to the obtained field of the charging characteristic comprises:
according to the field of the charging characteristic, indicating that group charging is performed on user equipments in a group in charging methods for charging rules;
the charging the user equipments in the group according to the charging rules comprises:
generating, according to the charging rules, charging data records comprising a group identifier for the user equipments in the group, and combining the charging data records according to the group identifier; or
generating charging data records of the user equipments in the group according to the charging rules, and combining, according to the charging methods, the charging data records of the user equipments having the same group identifier.

6. The group charging method according to claim 1, wherein the obtaining the field of the charging characteristic of the user equipment comprises:
obtaining, in subscription data information, the field of the charging characteristic used for indicating group charging.

7. The group charging method according to claim 6, wherein the obtaining, in the subscription data information, the field of the charging characteristic used for indicating group charging comprises:
obtaining a charging characteristic carried by a mobility management entity in a sent create session request message or a sent create packet data protocol context request message; or
obtaining a charging characteristic carried by a packet data network gateway or a serving gateway in an IP CAN session establishment indication message; or
obtaining a charging characteristic carried by a home subscriber server or a group subscription database in an update location acknowledgment message.

8. The group charging method according to claim 1, wherein the obtaining the group identifier of the user equipment comprises:
obtaining a group identifier carried in an attach request message by the user equipment; or
obtaining a group identifier carried in an update location acknowledgment message by a home subscriber server or a group subscription database; or
obtaining a group identifier carried in a profile information response message by a service subscription database or a group subscription database; or
obtaining a group identifier carried in a create session establishment request message or a create packet data context request message by a mobility management entity; or
obtaining a group identifier carried in an IP CAN session establishment acknowledgment message or an IP CAN session modification acknowledgment message by a policy and charging rule function entity.

9. The group charging method according to claim 1, further comprising:
sending a credit request message comprising the group identifier to an online charging system.

10. The group charging method according to claim 1, further comprising:
after receiving an overdue notification message comprising the group identifier, setting a gateway state in a PCC rule of the user equipments in the group to be turn-off, or deleting bearers of the user equipments in the group.

11. The group charging method according to claim 1, wherein the obtaining at least one of the group identifier and the field of the charging characteristic of the user equipment, the generating the charging rule according to the obtained at least one of the group identifier and the field of the charging characteristic, and the charging the user equipments in the group according to the charging rules comprise:
obtaining, by a policy and charging rule function entity or a packet data network gateway, at least one of the group identifier and the field of the charging characteristic of the user equipment, generating the charging rule according to the obtained at least one of the group identifier and the field of the charging characteristic, and charging the user equipments in the group according to the charging rules; or
obtaining, by a policy and charging rule function entity, at least one of the group identifier and the field of the charging characteristic of the user equipment, and generating the charging rule according to the obtained at least one of the group identifier and the field of the charging characteristic, and charging, by a packet data network gateway or a serving gateway, the user equipments in the group according to the charging rules.

12. The group charging method according to claim 1, wherein the charging the user equipments in the group according to the charging rules comprises:
performing charging measurement according to a measurement method in a charging rule, wherein the measurement method comprises a duration measurement method, a traffic measurement method or an event measurement method;
generating a charging data record according to the result of charging measurement.

13. The group charging method according to claim 12, wherein the performing the charging measurement according to the event measurement method in the charging rule comprises:
measuring the number of times by which all user equipments in the group send signaling; or
measuring the number of PDP contexts or the number of bearer contexts of all user equipments in the group; or
measuring the number of the user equipments in the group; or
measuring the number of datagrams sent by all user equipments in the group.

14. A charging processing apparatus, comprising:
an obtaining module, configured to obtain at least one of a group identifier and a field of a charging characteristic of a user equipment;
a charging rule generating module, configured to generate a charging rule according to the obtained at least one of the group identifier and the field of the charging characteristic;
further comprising:
a sending module, configured to send the charging rule to a charging network element, wherein the charging network element charges user equipments in a group according to charging rules; or
a charging module, configured to charge user equipments in a group according to charging rules.

15. The charging processing apparatus according to claim 14, wherein the charging rule generating module comprises:
a first rule generating unit, configured to allocate charging rules having a same charging key to user equipments having the same group identifier; and
the charging module comprises:
a first charging unit, configured to generate, according to the charging rules, a group charging data record for corresponding user equipments having the same group identifier; or
configured to generate, according to the charging rules, charging data records comprising the group identifier for the user equipments in the group, and combine the charging data records according to the group identifier; or
configured to generate, according to the charging rules, charging data records of the user equipments in the group, and combine the charging data records according to the charging key.

16. The charging processing apparatus according to claim 14, wherein the charging rule generating module comprises:
a second rule generating unit, configured to generate charging rules comprising the group identifier;
the charging module comprises:
a second charging unit, configured to generate, according to the charging rules, charging data records comprising the group identifier, and combine the charging data records according to the group identifier; or
configured to generate, according to the charging rules, charging data records of the user equipments in the group, and combine, according to the group identifier, the charging data records of user equipments belonging to the same group.

17. The charging processing apparatus according to claim 14, wherein the charging rule generating module comprises:
a third rule generating unit, configured to indicate, in charging rules, that charging methods are to perform group charging on user equipments having the same group identifier; and
the charging module comprises:
a third charging unit, configured to generate, according to the charging rules, charging data records comprising the group identifier for the user equipments in the group, and combine the charging data records according to the group identifier; or
configured to generate charging data records of the user equipments in the group according to the charging rules, and combine, according to the charging methods, the charging data records of the user equipments having the same group identifier.

18. The charging processing apparatus according to claim 14, wherein the charging rule generating module comprises:
a fourth rule generating unit, configured to, according to the field of the charging characteristic, indicate, in charging methods for charging rules, that group charging is performed on user equipments in a group; and
the charging module comprises:
a fourth charging unit, configured to generate, according to the charging rules, charging data records comprising the group identifier for the user equipments in the group, and combine the charging data records according to the group identifier; or
configured to generate charging data records of the user equipments in the group according to the charging rules, and combine, according to the charging methods, the charging data records of the user equipments having the same group identifier.

19. The charging processing apparatus according to claim 14, further comprising:
a first sending module, configured to send a credit request message comprising the group identifier to an online charging system.

20. The charging processing apparatus according to claim 14, further comprising:
an overdue processing module, configured to, after receiving an overdue notification message comprising the group identifier, set a gateway state in a PCC rule of the user equipments in the group to be turn-off, or delete bearers of the user equipments in the group.

21. The charging processing apparatus according to claim 14, wherein the charging module comprises:
a measurement unit, configured to perform charging measurement according to a measurement method in a charging rule, wherein the measurement method comprises a duration measurement method, a traffic measurement method or an event measurement method; and
a charging unit, configured to generate a charging data record according to the result of charging measurement performed by the measurement unit.

22. The charging processing apparatus according to claim 21, wherein the measurement unit comprises:
a first measuring sub-unit, configured to measure the number of times by which all user equipments in the group send signaling; or measure the number of PDP bearer contexts sent by all user equipments in the group; or measure the number of the user equipments in the group; or measure the number of datagrams sent by all user equipments in the group.

23. A communication system, comprising the charging processing apparatus according to any one of claims 14 to 22.

24. The communication system according to claim 23, wherein the charging processing apparatus is disposed in a packet data network gateway, a policy and charging rule function entity, a serving gateway or a charging system.
